Europäisches Patentamt

European Patent Office

Office européen des brevets

(11) Veröffentlichungsnummer: **0 061 050 B1**

(12) **EUROPÄISCHE PATENTSCHRIFT**

(45) Veröffentlichungstag der Patentschrift:
31.07.85

(51) Int. Cl.⁴: **H 04 N 9/83, H 04 N 5/92**

(21) Anmeldenummer: **82101798.5**

(22) Anmeldetag: **08.03.82**

(54) **Videorecorder zur Aufzeichnung eines mit dem Videosignal frequenzmodulierten Bildträgers.**

(30) Priorität: **20.03.81 DE 3110968**

(43) Veröffentlichungstag der Anmeldung:
**29.09.82 Patentblatt 82/39**

(45) Bekanntmachung des Hinweises auf die Patenterteilung:
**31.07.85 Patentblatt 85/31**

(84) Benannte Vertragsstaaten:
**AT BE CH DE FR GB IT LI LU NL SE**

(56) Entgegenhaltungen:
**DE - A - 2 201 691**
**DE - B - 1 277 900**
**US - A - 3 830 968**
**US - A - 3 839 731**
**US - A - 4 051 515**

**IEEE TRANSACTIONS ON CONSUMER ELECTRONICS,**
**Band 22, Nr 1, Februar 1976, Seiten 54-60, New York, US**
**NAKAMURA: "Simplified Timer-Division Color Signal**
**Multiplexing for Video Disc and VTR by using a new**
**Solid-State Memory"**
**TOUTE L'ELECTRONIQUE, Nr. 444, Juni 1979, Seiten 8**
**und 9, Paris, FR J-ML: "Un magnétoscope à cassettes**
**expérimental: le (fixed-head VCR) de Toshiba"**

(73) Patentinhaber: **Licentia Patent-Verwaltungs-GmbH,**
**Theodor-Stern-Kai 1, D-6000 Frankfurt/Main 70 (DE)**

(72) Erfinder: **Kluth, Hans-Jürgen, Ing. grad.,**
**Gartenstrasse 14, D-3008 Grabsen 8 (DE)**

(74) Vertreter: **Einsel, Robert, Dipl.-Ing., Theodor-Stern-Kai 1,**
**D-6000 Frankfurt/Main 70 (DE)**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

**Beschreibung**

Bei Videorecordern ist es bekannt, das Videosignal durch Frequenzmodulation eines Bildträgers auf sogenannten Schrägspuren aufzuzeichnen, die unter einem vorbestimmten Winkel (bei VHS-Geräten ca. 6°) schräg zur Längsrichtung des Bandes verlaufen. Dabei ist vorzugsweise entlang einer derartigen Schrägspur jeweils z. B. ein Halbbild aufgezeichnet. Aufzeichnung und Abtastung erfolgen mit rotierenden Köpfen (bei VHS zwei Köpfe), die jeweils abwechselnd mit den Schrägspuren Kontakt haben. Auf diese Weise wird bei relativ langsamer Bandgeschwindigkeit die für Videoaufzeichnung erforderliche hohe Relativgeschwindigkeit zwischen Kopf und Band erreicht.

Bei derartigen Geräten wird das Tonsignal auf einer parallel zur Bandkante verlaufenden Längsspur mit einer Breite von etwa 1 mm mit einem feststehenden Kopf aufgezeichnet und abgetastet. Für die Aufzeichnung und Abtastung des Tonsignals ist also die kleinere Längsgeschwindigkeit des Bandes und nicht die wesentlich höhere Relativgeschwindigkeit zwischen Kopf und Band auf den Schrägspuren entscheidend. Die Längsgeschwindigkeit des Bandes ist nun in der Praxis zur Vergrößerung der Gesamtspieldauer eines Bandes auf Werte in der Größenordnung von 2 cm/s verringert worden. Diese geringe Relativgeschwindigkeit zwischen dem Band und dem Tonkopf hat einen nachteiligen Einfluß auf die Qualität des aufgezeichneten Tonsignals. Eine Hifi-Qualität läßt sich bei dieser geringen Relativgeschwindigkeit praktisch nicht mehr erreichen. Das aufgezeichnete Tonsignal hat nur noch eine Bandbreite von etwa 70 Hz bis max. 10 kHz. Wegen der geringen Breite der Längsspur ergibt sich auch ein relativ schlechter Störabstand. Dieser wird bei der Aufzeichnung von zwei Tonsignalen für Stereo-Wiedergabe oder Zweisprachen-Wiedergabe durch die dann notwendige Halbierung der Breite der Längsspur noch schlechter.

Es ist an sich denkbar, ähnlich wie bei der Bildplatte auch das Tonsignal zusammen mit dem Bildträger auf den Schrägspuren aufzuzeichnen. Eine solche Lösung konnte jedoch in der Praxis bisher nicht erfolgreich realisiert werden. Einerseits ist der verfügbare Frequenzbereich bereits voll ausgenutzt. Der Bereich von etwa 0—1,3 MHz wird nämlich von dem in der Frequenz herabgesetzten quadraturmodulierten Farbträger und der Rest des Frequenzbereiches durch das Frequenzspektrum des modulierten Bildträgers eingenommen. Eine Aufzeichnung eines Tonträgers in der noch vorhandenen schmalen Frequenzlücke zwischen dem modulierten Farbträger und dem Frequenzspektrum des Bildträgers ist durch die notwendigen steilen Filterflanken für den Farbträger und den Bildträger wegen der auftretenden Phasen- und Gruppenlaufzeitfehler praktisch nicht möglich. Andererseits entsteht bei der Aufzeichnung des Tonsignals auf den Schrägspuren bei der Wiedergabe eine beträchtliche Störung durch den Kopfwechsel. Bei der Bildwiedergabe stört der Kopfwechsel nicht, weil er während der Vertikalaustastlücke erfolgt. Bei der Wiedergabe des Tonsignals wird jedoch dieser Kopfwechsel als störendes Geräusch hörbar, weil durch den Kopfwechsel die Abtastung des z. B. einem Träger aufmodulierten Tonsignals vom Band kurzzeitig unterbrochen ist oder Phasensprüngen unterliegt. Die dadurch entstehenden nadelförmigen Störimpulse mit einer Grundfrequenz von 50 Hz und einem großen Anteil an Oberwellen erzeugen bei der Tonwiedergabe ein kontinuierliches Störgeräusch.

Der Erfindung liegt die Aufgabe zugrunde, die Aufzeichnung des Tonsignals auf den Schrägspuren mit verbesserter Qualität und ohne Störung durch den Kopfwechsel zu ermöglichen.

Diese Aufgabe wird durch die im Anspruch 1 beschriebene Erfindung gelöst. Vorteilhafte Weiterbildungen der Erfindung sind in den Unteransprüchen beschrieben.

Bei der Erfindung wird durch die große Relativgeschwindigkeit die verfügbare Bandbreite des Tonsignals bei der Aufzeichnung auf den Schrägspuren vorteilhaft auch zur Aufzeichnung des Tonsignals genutzt. Durch hochfrequenzmäßige Aufzeichnung des Tonsignals läßt sich eine UKW-Qualität für den Ton erreichen. Ein weiterer Vorteil besteht darin, daß die bisher benötigte Längsspur für die Aufzeichnung des Tonsignals entfallen kann. Es kann dann entweder ein zusätzlicher Bereich des Magnetbandes für die Aufzeichnung des Bildsignals verwendet werden oder dieser Bereich kann zusätzlich genutzt werden. Dadurch kann entweder die Qualität der Bildaufzeichnung verbessert oder der Bandverbrauch verringert werden. Eine besonders gute Ausnutzung des Magnetbandes läßt sich erreichen, wenn gemäß der DE-OS 3 011 635 zusätzlich die bisher verwendete Synchronspur parallel zur Bandkante zur Markierung der Schrägspuren eingespart und das zur Kopfregelung benötigte, die einzelnen Schrägspuren anzeigende Signal mit einem feststehenden Kopf aus den Schrägspuren unter Ausnutzung des sogenannten Azimutwinkels abgeleitet wird. Dadurch läßt sich ein Videorecorder nur mit rotierenden Köpfen für das Schreiben der Schrägspuren, also ohne zusätzliche Aufzeichnungsköpfe für Längsspuren wie z. B. für die Tonaufzeichnung oder die Synchronspur, verwirklichen. Die dadurch frei werdende Bandfläche ermöglicht bei gleicher Bildqualität und gleicher Bandlänge eine Erhöhung der Spielzeit von etwa 16%. Das bedeutet bei einer für eine Spieldauer von 4 Stunden vorgesehenen Kassette eine zusätzliche Spielzeit von 40 Minuten.

Die Aufzeichnung des Tonsignals in FM ermöglicht, daß Amplitudenschwankungen des aufgezeichneten Tonträgers weitestgehend durch eine Begrenzung ausgeglichen werden können. Diese Modulationsart ist aber zugleich auch eine der Grundlagen zur erfindungsgemäßen Lösung der gestellten Aufgabe. Die für die Fehlerbeseitigung eingeführte unterschiedliche Verstärkung der beiden Kopf-Ausgangssignale wird nämlich bei der Frequenzdemodulation wieder begrenzt.

Es ist zwar ein Videorecorder mit Aufzeichnung in Schrägspuren bekannt (DE-B-1 277 900), bei dem die Tonsignale zusammen mit den Bildsignalen durch denselben Kopf aufgezeichnet werden, doch sind bei diesen bekannten Videorecordern keine Überlappungszonen zweier Köpfe vorgesehen.

Es ist ferner bekannt (US-A-3 830 968), Tonstörungen bei Videorecordern dadurch zu vermeiden, daß der modulierte Tonträger dann verstärkt wird, wenn gleiche Frequenzanteile im modulierten Videoträger auftreten. Auch hier sind keine überlappenden Zonen der Tonaufzeichnung vorgesehen.

Durch IEEE Transactions on Consumer Electronics, Band 22, Nr. 1, Februar 1976, Seiten 54—60, ist es bekannt, zwei FM-Tonkanäle im FM-Videokanal auf zwei Trägerfrequenzen von 1,5 MHz und 2 MHz aufzuzeichnen. Eine Anregung für die Behandlung der Tonaufzeichnung bei Überlappungszonen der Tonköpfe ist nicht gegeben.

Ein Ausführungsbeispiel der Erfindung wird an Hand der Zeichnung erläutert. Darin zeigt

Fig. 1 das Frequenzspektrum für die Aufzeichnung der einzelnen Signale auf den Schrägspuren,

Fig. 2 ein Blockschaltbild für die Aufzeichnung,

Fig. 3 ein Blockschaltbild für die Wiedergabe,

Fig. 4 die von den Köpfen gelieferten Signalpakete,

Fig. 5 ein detailliertes Diagramm der im Tonsignalweg bei der Wiedergabe auftretenden Signale,

Fig. 6 eine schematische Darstellung des Aufzeichnungsapparates.

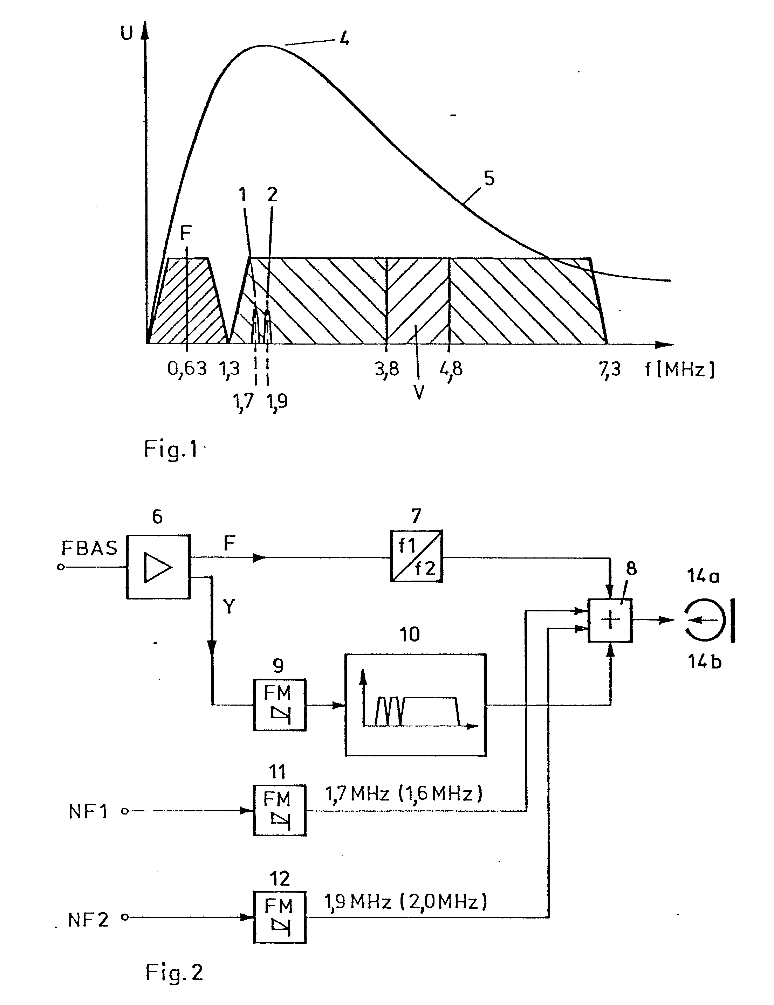

In Fig. 1 ist im unteren Frequenzbereich der in der Frequenz herabgesetzte quadraturmodulierte Farbträger F mit einer Frequenz von 0,63 MHz und einer Bandbreite von ca $\pm$ 500 kHz aufgezeichnet. Das Videosignal V ist durch FM eines Bildträgers aufgezeichnet. Dessen statische Modulationskennlinie erstreckt sich zwischen den Frequenzen 3,8 und 4,8 MHz, wobei 3,8 MHz dem Ultra-Schwarzwert und 4,8 MHz dem Weißwert des Videosignals entspricht. Durch die Modulation ergibt sich ein Frequenzspektrum von 1,3 bis 7,3 MHz. Durch den Kopfspalt bedingt, wird das obere Seitenband (oberhalb 6 MHz) nicht vollständig abgetastet, so daß Störungen durch Signalspiegelungen vermindert werden. Innerhalb dieses Frequenzspektrums sind bei den Frequenzen 1,7 und 1,9 MHz zwei je mit einem NF-Tonsignal in FM modulierte Tonträger 1 und 2 aufgezeichnet. Wenn senderseitig ein Stereosignal eingeführt wird, das einen Abstand der FM-Tonträger von 250 kHz hat, so sollten zum Zwekke der einfachen Umsetzung auch die Träger 1, 2 entsprechenden Abstand haben (z. B. 1,65 und 1,9 MHz oder 1,7 und 1,95 MHz). Die beiden NF-Tonsignale können ein Stereosignal oder ein Tonsignal in verschiedenen Sprachen darstellen. Die Frequenzen der beiden Tonträger 1, 2 liegen etwa beim Maximum 4 der Kopf-Band-Frequenzgangkennlinie 5, die bei der Aufzeichnung des gesamten Signals auf den Schrägspuren wirksam ist. Dort ist die geringste Störung des Bildsignals durch das Tonsignal und umgekehrt gegeben, weil bezogen auf das demodulierte Videosignal die höherfrequenten Bildanteile in dem gewählten Bereich nur zu 10% der Übertragungszeit vorkommen. Die für die Bildschärfe maßgebenden Frequenzen bleiben dagegen ungeschwächt erhalten. Zugleich haben die Videoköpfe aller Heimvideorecorder im Bereich um 2 MHz ihre größte Empfindlichkeit, so daß für die Wiedergabe die Stelle des optimalen Störabstandes gewählt ist. Damit ist die Austauschbarkeit von Videokassetten mit schwach aufgezeichneten Tonträgern innerhalb eines Kassettensystem problemlos.

In Fig. 2 wird das FBAS-Signal in der Schaltung 6 durch frequenzselektive Mittel in den modulierten Farbträger F und das Leuchtdichtesignal Y getrennt. Der modulierte PAL-Farbträger F wird in dem Frequenzumsetzer 7 von seiner Originalfrequenz 4,43 MHz auf die Frequenz 0,63 MHz umgesetzt und der Addierstufe 8 zugeführt. Das Leuchtdichtesignal Y wird in dem Frequenzmodulator 9 einem Bildträger aufmoduliert, wodurch ein Frequenzspektrum von 1,3 bis 7,3 MHz gemäß Fig. 1 entsteht. In diesem Frequenzspektrum werden in der Schaltung 10 durch zwei nicht dargestellte Notch-Filter die Frequenzbereiche um 1,7 und 1,9 MHz unterdrückt. Das dadurch verbleibende Signal wird ebenfalls der Addierstufe 8 zugeführt. Zwei Tonsignale NF1 und NF2 werden in zwei Frequenzmodulatoren 11, 12 zwei Trägern mit der Frequenz von 1,7 und 1,9 MHz aufmoduliert, die ebenfalls der Addierstufe 8 zugeführt werden. Bei einem zu übertragenden NF-Frequenzband von 15 kHz wird ein FM-Hub von $\pm$ 50 kHz gewählt, wodurch sich Modulationsbandbreiten von 1,7 bzw. 1,9 MHz $\pm$ 65 kHz ergeben. Zur Vermeidung von Störungen im Y-Signal durch die beiden Tonträger werden in der Schaltung 10 die Frequenzen der beiden Tonträger mit einer Bandbreite von $\pm$ 65 kHz durch die genannten Notch-Filter unterdrückt. Das Ausgangssignal der Addierstufe 8 enthält die in Fig. 1 dargestellten Signale und wird den Magnetköpfen 14a, 14b abwechselnd zur Aufzeichnung auf einem Magnetband zugeführt. Dieses in Fig. 1 oder 2 dargestellte Signalgemisch wird dann auf den Schrägspuren eines Magnetbandes aufgezeichnet.

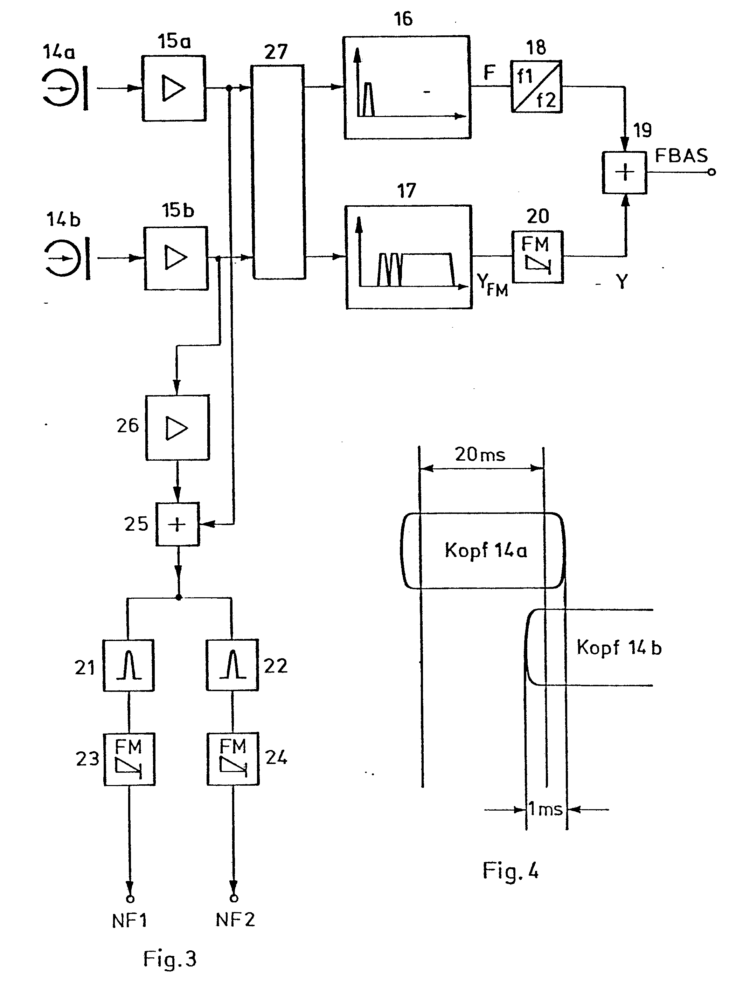

In Fig. 3 wird das von den Köpfen 14a, 14b abwechselnd abgetastete Signalgemisch gemäß Fig. 1 in den Verstärkern 15a bzw. 15b verstärkt und mit den Filtern 16 und 17 in den modulierten Farbträger F und den modulierten Bildträger $Y_{FM}$ aufgespalten. Da der Wechsel zwischen den Köpfen 14a, 14b während der Dauer der Vertikalaustastlücke erfolgt, sind keine zusätzlichen Maßnahmen bezüglich der Videosignale erforderlich. Es ist aber vorteilhaft, bei der Wiedergabe für das von den Köpfen 14a, 14b gelieferte Signalgemisch eine harte elektronische Überblendung einzuführen, wie es bei den handelsüblichen Geräten (VCR, VHS, Betamax, V 2000) der Fall ist. Zu diesem Zweck ist zwischen die Verstärker 15 und die Filter 16, 17 eine Überblendeinrichtung 27 (elektronischer Schalter) eingefügt. Der Farbträger F wird in dem Frequenzumsetzer 18 wieder auf die Frequenz von 4,43 MHz umgesetzt und der Addierstufe 19 zugeführt. In dem Filter 17 werden Frequenzbereiche bei 1,7 und 1,9 MHz durch Notch-Filter unterdrückt, um eine Störung der Bildwiedergabe durch die Tonträger zu vermeiden (wodurch ggf. eine Erhöhung der aufgezeichneten Tonträgersignale ermöglicht wird — Verbesserung des Störabstandes). Die dadurch an sich bedingte geringfügige Verringerung der Bildschärfe ist praktisch nicht wahrnehmbar, weil die unterdrückten Bereiche statistisch weniger gewichtig sind. In dem Frequenzdemodulator 20 wird das Leuchtdichtesignal Y gewonnen und der Addierstufe 19 zugeführt. Das von den Köpfen 14a und 14b gelieferte Gesamtsignalgemisch hat Überlappungszonen, in denen beide Köpfe 14a, 14b Kontakt mit dem Band haben und Ausgangssignale liefern.

Fig. 4 zeigt das von den Köpfen 14a und 14b gelieferte Signalgemisch, wobei die Umschaltstellen markiert sind. Weil diese Überlappungszonen Phasenschwankungen unterliegen, können sich die Signalteile in diesen Zonen bei der Addition verstärken oder auslöschen, da beide Trägerpakete wegen der mitübertragenen Farbträgerinformation mit herabgesetztem Träger im AM sorgfältig auf gleiche Amplitude eingestellt sind. Diese Auslöschung liefert Tonstörungen.

Vor jeglicher Schaltung zum Linearisieren der Hüllkurve des von den Köpfen gelieferten Videosignalgemisches oder vor jeglicher Einrichtung zur harten elektronischen Überblendung wird das gesamte von den Köpfen 14a, 14b gelieferte Signalgemisch abgezweigt. Die beiden modulierten Tonträger werden mit schmalbandigen Filtern 21, 22 selektiv aus dem Signalgemisch gemäß Fig. 1 herausgetrennt und entsprechend abgestimmten Frequenzdemodulatoren 23, 24 zugeführt. Die Demodulatoren liefern die beiden Tonsignale NF1 und NF2. Für diese Demodulatoren können PLL-Typen (z. B. TBA 1205) eingesetzt werden, die auch Signale verarbeiten können, die nicht von hochstabilen Sendern stammen, sondern von Heimgeräten, die mit preiswerten Tonmodulatoren ausgerüstet sind (z. B. Verarbeitung von Eigentondarbietungen). Das vom Kopf 14a bzw. vom Verstärker 15a gelieferte Gesamtsignal wird vor der Zuführung zu den Demodulatoren 23, 24 einer Addierstufe 25 zugeleitet. Das vom Kopf 14b bzw. vom Verstärker 15b gelieferte Gesamtsignal wird einem Verstärker 26 zugeführt, dessen Ausgangssignal ebenfalls der Addierstufe 25 zugeführt wird. Das Ausgangssignal der Addierstufe 25 hat jetzt auf jeden Fall auch während der Umschaltphase der Köpfe ein Signal mit Tonsignaltanteil, so daß die sonst unvermeidliche 50 Hz-Störung nicht auftreten kann. Der Verstärker 26 macht eine Verstärkung um den Faktor 2. Da dann die beiden Tonträger 1, 2 an den Eingängen der Addierstufe 25 unterschiedliche Amplituden haben, können sie auch bei 180°-Gegenphase einander nicht auslöschen.

In der Praxis wurde ein Ausführungsbeispiel erprobt, bei dem als Notch-Filter ein im handelsüblichen Farbfernsehempfänger für die Unterdrückung des Farbträgers im Y-Kanal verwendeter Typ modifiziert wurde, d. h. für die andere Frequenz- und Bandbreite abgewandelt wurde.

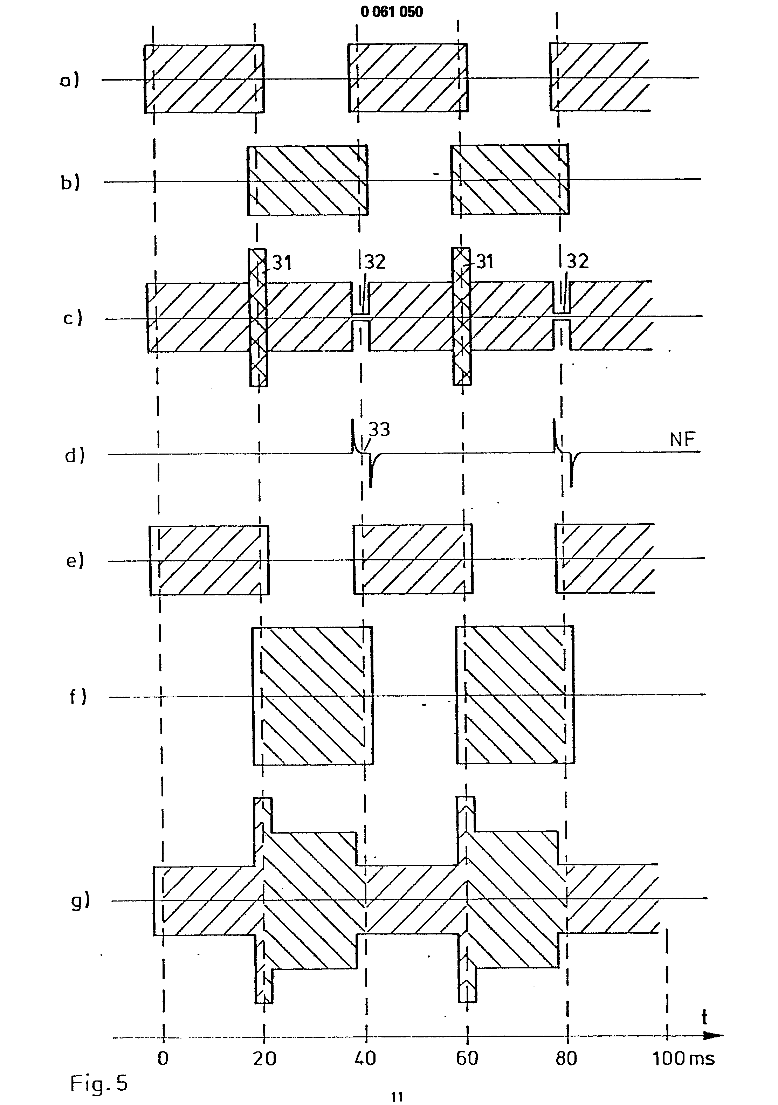

In Fig. 5 ist der zeitliche Signalverlauf der Kopfsignale bezüglich der Tonsignalverarbeitung dargestellt. Und zwar zeigen

a) Tonträgersignalpakete vom Kopf 14a
b) Tonträgersignalpakete vom Kopf 14b
c) Summensignal aus a) und b) ohne die erfindungsgemäße unterschiedliche Verstärkung. Man sieht Zonen 31 mit Signalvergrößerungen und Zonen 32 mit Signalauslöschungen.
d) NF-Tonsignalstörung 33 am Ausgang des Demodulators ohne Anwendung der Erfindung und bei unmoduliertem Träger. Diese Störungen wirken, da FM-Demodulation vorliegt, bei vergrößerten Signalen 31 durch Begrenzung nicht störend, während sie bei den Signalauslöschungen 32 störend wirken, da die Funktion der Demodulatoren unterbrochen wird.
e) Wie a) bei Anwendung der Erfindung (keine Änderung).
f) Ausgangssignal von 26 (Verstärkung z. B. mit dem Faktor 2).
g) Ausgangssignale der Addierstufe 25. Man sieht nur noch Signalbereiche mit endlichen Amplituden, die so begrenzt werden können, daß eine kontinuierliche störungsfreie Demodulation ermöglicht wird.

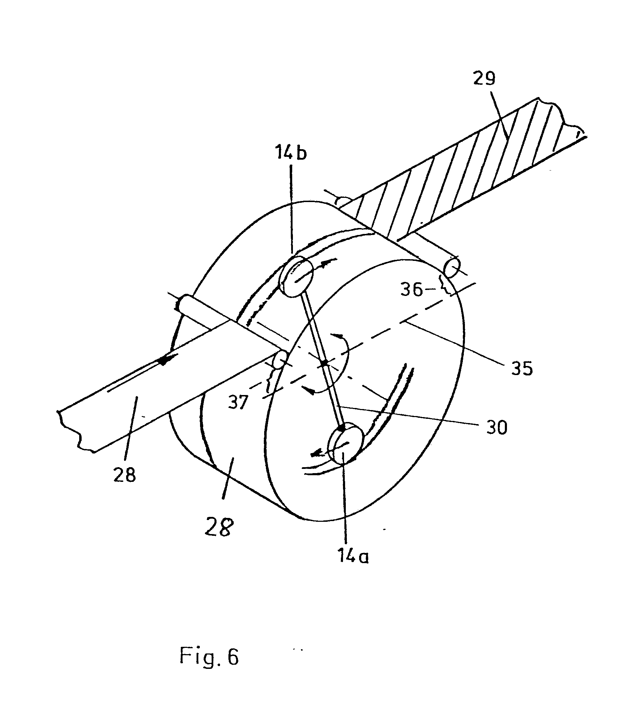

Fig. 6 zeigt eine schematische Konstruktion des Kopfrades mit einem Band 28, das eine Kopfradtrommel 30 mit zwei Köpfen 14a, 14b nach Ω-Art umschließt, wobei auf dem Band 28 Schrägspuren 29 geschrieben werden. Die Linie 35 zeigt, daß die beiden Köpfe 14a, 14b in den Bereichen 36, 37 gleichzeitig abtasten können.

## Patentansprüche

1. Videorecorder zur Aufzeichnung und/oder Wiedergabe eines mit dem Videosignal (V) frequenz- oder phasenmodulierten Bildträgers mit einer rotierenden Kopfradtrommel, deren Köpfe (14a, 14b) abwechselnd entlang Schrägspuren (29) das Magnetband (28) überstreichen, wobei in Überlappungszonen (36, 37) zwei Köpfe (14a, 14b) zugleich wirksam sind und mit den Köpfen (14a, 14b) zusätzlich ein mit einem Tonsignal (NF1, NF2) frequenzmodulierter Tonträger (1, 2) entlang den Schrägspuren (29) aufgezeichnet wird und bei der Wiedergabe die Ausgangssignale der Magnetköpfe (14a, 14b) einerseits dem Videosignalweg (27) und andererseits dem Tonsignalweg (21—26) zugeführt werden, dadurch gekennzeichnet, daß bei der Wiedergabe die frequenzmodulierten Tonträger (1, 2) vor der Demodulation einander additiv überlagert und so unterschiedlich verstärkt werden, daß sie bei der additiven Überlagerung (25) keine gleichen Amplituden haben und somit auch bei 180°-Gegenphase einander nicht auslöschen.

2. Recorder nach Anspruch 1, dadurch gekennzeichnet, daß vor der Addierstufe (25) für die additive Überlagerung der Ausgangssignale das eine Kopfausgangssignal gegenüber dem anderen Kopfausgangssignal auf etwa die doppelte Amplitude verstärkt ist.

3. Recorder nach Anspruch 1 und/oder 2, dadurch gekennzeichnet, daß die Ausgangssignale der Köpfe (14a, 14b) vor dem Eingang der Addierstufe (25) des Tonsignalweges nicht einer zusätzlichen Überblendungskorrektur oder -beeinflussung unterworfen sind.

4. Recorder nach Anspruch 1 und/oder 2, dadurch gekennzeichnet, daß für das Kopfausgangssignal hinsichtlich des Tonsignals eine weiche elektronische Überblendung vorgesehen ist.

5. Recorder nach einem oder mehreren der vorhergehenden Ansprüche, dadurch gekennzeichnet, daß zwei verschiedene Trägerfrequenzen (1, 2) für die Aufzeichnung eines Stereosignals oder eines Zweiton-Signals verwendet sind.

**Claims**

1. Videorecorder for the recording and/or reproduction of a picture carrier, frequency or phase modulated by the video signal (V), using a rotating head drum, the heads (14a, 14b) of which alternately traverse along oblique tracks (29) of the magnetic tape in such a way that two heads (14a, 14b) are simultaneously effective in overlapping zones (36, 37) and in addition a sound carrier (1, 2), frequency modulated by a sound signal (NF1, NF2), is recorded along the oblique tracks (29) by means of the heads (14a, 14b), and upon the reproduction, the output signals of the magnetic heads (14a, 14b) are fed on the one hand to the video signal path (27) and on the other hand to the sound signal path (21—26), characterized in that upon the reproduction, the frequency modulated sound carriers (1, 2) are additively superimposed before the demodulation and are so differentially amplified that upon the additive superimposition (25) they do not have equal amplitude and accordingly also in the event of 180° phase opposition do not extinguish each other.

2. Recorder according to claim 1, characterized in that before the addition stage (25) for the additive superimposition of the output signals, one of the head output signals is amplified relative to the other head output signal to about twice the amplitude.

3. Recorder according to claim 1 and/or 2, characterized in that the output signals of the heads (14a, 14b) are not subjected to an additional blending correction or influencing before the entry to the adding stage (25) of the sound signal path.

4. Recorder according to claim 1 and/or 2, characterized in that a weak, electronic blending is provided for the head output signal having regard to the sound signals.

5. Recorder according to one or more of the foregoing claims, characterized in that the two different carrier frequencies (1, 2) are used for the recording of a stereo signal or a two-sound signal.

**Revendications**

1. Magnétoscope pour l'enrigstrement et/ou la reproduction d'une porteuse image modulée en fréquence ou en phase par le signal vidéo (V), comportant un tambour rotatif porte-têtes, dont les têtes (14a, 14b) balaient alternativement la bande magnétique (28) le long de pistes inclinées (29), de telle sorte que dans des zones de chevauchement (36, 37) les deux têtes (14a, 14b) agissent simultanément et qu'au moyen des têtes (14a, 14b) supplémentairement, une porteuse sonore (1, 2) modulée en fréquence par un signal sonore (NF1, NF2) soit enregistrée le long des pistes inclinées (29) et que, lors de la reproduction, les signaux de sortie des têtes magnétiques (14a, 14b) soient appliqués d'une part à la voie de transmission des signaux vidéos (27) et d'autre part à la voie de transmission de signaux sonores (21 à 26), caractérisé en ce que, lors de la reproduction, les porteuse sonores (1, 2) modulées en fréquence sont combinées par addition l'une avec l'autre avant la démodulation et sont amplifiées différemment de manière que, lors de la combinaison par addition (25), elles n'aient pas des amplitudes égales et ne puissent pas ainsi s'effacer mutuellement même avec un déphasage de 180°.

2. Magnétoscope selon la revendication 1, caractérisé en ce que, avant l'étage d'addition (25) servant à la combinaison par addition des signaux de sortie, le signal de sortie d'une tête est amplifié à peu près de l'amplitude double par rapport à l'autre signal de sortie de tête.

3. Magnétoscope selon la revendication 1 et/ou 2, caractérisé en ce que les signaux de sortie des têtes (14a, 14b) ne sont par soumis, avant l'entrée de l'étage d'addition (25) de la voie de transmission de signaux sonores, à une action ou correction additionnelle de fading.

4. Magnétoscope selon la revendication 1 et/ou 2, caractérisé en ce que, pour le signal de sortie de tête, il est prévu en ce qui concerne le signal sonore un fading électronique faible.

5. Magnétoscope selon une ou plusieurs des revendications précédentes, caractérisé en ce que deux fréquences porteuse différentes (1, 2) sont utilisées pour l'enregistrement d'un signal stéréro ou d'un signal à deux sons.

Fig.1

Fig. 2

Fig. 3

Fig. 4

Fig. 5

Fig. 6